# EUROPEAN PATENT APPLICATION

(11) **EP 2 621 165 A1**
(43) Date of publication of application: **31.07.2013**
(21) Application number: 12305097.3
(22) Date of filing: 25.01.2012
(51) Int. Cl.: H04N 7/14, H04N 7/15, H04M 3/56

(54) **Videoconference method and device**

(71) Applicant: Alcatel Lucent, S.A., 75007 Paris (FR)
(72) Inventor: Delegue, Gérard, 94230 Cachan (FR); Squedin, Sylvain, 91070 Bondoufle (FR); Vanbelle, Alexandre, 92160 Antony (FR)
(74) Representative: Gabriel, Franck

(57) **Abstract**

A videoconference method wherein at least one presenter delivers a presentation of multimedia information to a remote audience comprising multiple remote attendees, wherein the method comprises:
- detecting events during the presentation, said events being generated by the remote attendees and by the presenter;
- affecting a timestamp to each event;
- analyzing the different events from the presenter and the remote attendees in synchronicity;
- correlating the events from the presenter and at least one of the remote attendees based on said timestamp;
- deducing a significant situation based on the correlation step;
- forming an event notification based on the significant situation; and
- sending the event notification to the presenter or to a specific attendee of the remote audience.

## Description

An aspect of the invention relates to a videoconference method. The invention further relates to a videoconference device. The terminology videoconference is considered to comprise teleconference, web conference, multimedia conference and the like.

Such a method and device find a particular, though non exclusive, application in remote conferencing, namely a conference where a presenter delivers information (e.g. multimedia information) to a remote audience comprising multiple attendees in a live and online manner. The presenter and the attendees are in different locations. Each of the attendees may be in different locations.

For example, web conferences enable conducting live meetings or presentations via the Internet or an intranet. A web conference may comprise slide show presentations or whiteboard with annotations. However, this is not satisfactory because the presenter is not able to obtain live feedbacks from the remote audience. In particular, when the audience is not interacting with the presenter through questions or remarks, or when the presenter doesn't see the audience, the presenter cannot interpret implicit interactions of the body language. These result in that the presenter is unable to know whether his presentation is well adapted to the audience.

The document US 2010/0153861 describes an interactive event method and system allowing clients to provide feedback to the performing artist and/or producers relative to the event being observed. Feedback options include shout outs, emotapplause, and voting.

However, this is not satisfactory because the audience must explicitly interact with the presenter in order to send feedbacks, for example by way of applauses, votes, etc... If the audience is not explicitly interacting with the presenter, the presenter is not able to catch the feedbacks of the audience.

It is an object of the invention to propose a videoconference method and/or device that overcome the above mentioned drawbacks, and in particular improve the feedbacks of the attendees towards the presenter.

According to one aspect, there is provided a videoconference method wherein at least one presenter delivers a presentation of multimedia information to a remote audience comprising multiple remote attendees, wherein the method comprises:
- detecting events during the presentation, said events being generated by the remote attendees and by the presenter;
- affecting a timestamp to each event;
- analyzing the different events from the presenter and the remote attendees in synchronicity;
- correlating the events from the presenter and at least one of the remote attendees based on said timestamp;
- deducing a significant situation based on the correlation step;
- forming an event notification based on the significant situation; and
- sending the event notification to the presenter or to a specific attendee of the remote audience.

Analyzing the different events may comprise sorting the events according to presenter category and to audience category, and performing statistic on sliding time windows.

The event notification sent to the presenter may comprise a live feedback recommendation representative of an attention of the remote audience to the presentation.

The event notification sent to the specific attendee of the remote audience may comprise an alert indicating that the presenter is delivering information meeting requirement of said attendee.

The method may further comprise matching an event with information meeting requirement of said attendee based on combining a semantic comparison and a rule comparison.

The event notification may be presented as an alert to the presenter or to at least one of the remote attendees.

According to a further aspect, there is provided a computer program for a videoconference system, the videoconference system comprising at least a presenter processing unit, at least one remote attendee processing unit that are coupled to each other in a telecommunication network architecture through a control and processing entity, the computer program product comprising a set of instructions that, when loaded into a program memory of and run by the control and processing entity of the videoconference system, causes the system to carry out the steps of the videoconference method according to the invention.

According to another aspect, there is provided a videoconference device coupling at least one presenter delivering a presentation of multimedia information to a remote audience comprising multiple remote attendees through a telecommunication network architecture, the videoconference device comprising:
- a scene analyzer and a remote audience analyzers arranged to detect events during the presentation, said events being generated by the remote attendees and by the presenter, and to analyze the different events from the presenter and the remote attendees in synchronicity;
- a clock synchronizer coupled to the scene analyzer and the remote audience analyzers arranged to affect a timestamp to each event;
- a real-time event correlation entity arranged to correlate the events from the presenter and at least one of the remote attendees based on said timestamp, to deduce a significant situation based on said correlation, to form an event notification based on the significant situation, and to send the event notification to the presenter or to at least one of the remote attendees.

The videoconference device may further comprise an event collector arranged to collect the events detected by the scene analyzer and the remote audience analyzer and to store the events in an events database.

The videoconference device may further comprise an a-priori event classifier arranged to analyze and sort the events according to predefined rules stored in a rules database.

The videoconference device may further comprise a statistical event computation entity arranged to perform statistics related to the events on sliding time windows.

The videoconference device may further comprise an a-posteriori event correlation entity arranged to analyze the events generated during the presentation after the end of the presentation.

The videoconference device may further comprise an advanced events detection arranged to alert the remote attendees when an event or a combination of events occurs based on individual requirement specified by each remote attendee.

The videoconference device may further comprise an information detector arranged to detect a complex event based on the collected events by combining multiple events according to some predefined rules stored in the rules database.

The videoconference device may further comprise an attendee requirement collector arranged to collect requirements that have been specified by each attendee.

The videoconference device may further comprise an advanced information matcher arranged to detect when an event matches with information meeting requirement of said attendee.

According to still another aspect, there is provided a server comprising a videoconference device according to the invention.

The method and device of the invention enable providing reliable feedbacks of the remote audience to the presenter, in a live manner. As the feedbacks displayed to the presenter results from a correlation between events related to the presenter and events related to the remote audience, reliable feedbacks are provided to the presenter.

Further, the method and device of the invention enable providing reliable alerts to the remote audience when relevant information is presented during the presentation. As the alerts displayed results from an analysis of the content of the presentation (e.g. video, audio, slides) in order to extract real-time events and to correlate these events with requested ones using an advanced matching approach (semantic and rules combinations), reliable alerts are provided to the remote audience.

Other advantages will become apparent from the hereinafter description of the invention.

The present invention is illustrated by way of examples and not limited to the accompanying drawings, in which like references indicate similar elements:
- FIG. 1 is a block diagram schematically and partially illustrating a videoconference system between individuals, namely a presenter and numerous remote attendees that are located in different locations;
- FIG. 2 is a block diagram schematically illustrating an embodiment of live recommendation for the videoconference system of FIG. 1; and
- FIG. 3 is a block diagram schematically illustrating an advanced events detection module for the videoconference system of FIG. 1.

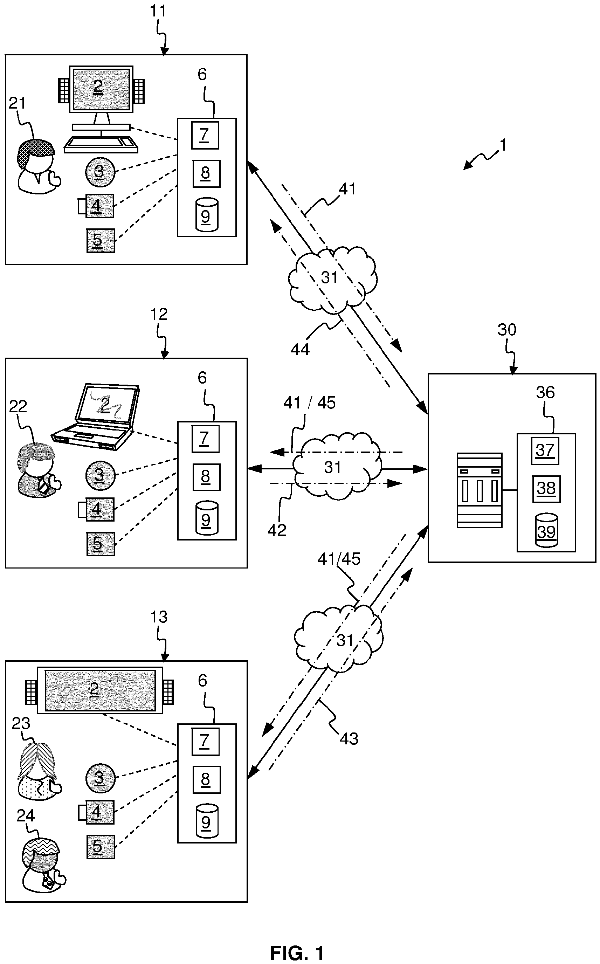

FIG. 1 is a block diagram schematically illustrating a system for a remote conferencing 1 between individuals in different locations.

A first individual, namely a presenter 21 is located in a first place 11. It is to be understood that there may be multiple presenter in the same or at different location, while generally only one presenter is presenting at a time. A second individual, namely an attendee 22 is located in a second place 12. Third and fourth individuals respectively attendees 23 and 24 are located in a third place 13. All of these individuals initiate a remote conference, wherein the presenter 21 delivers a presentation of multimedia information to the remote audience constituted by the attendees 22, 23 and 24.

Each of the places in which individuals are participants in the conference has a sound restitution means and/or visual restitution means 2, several sensors 3, 4, 5, and a local processing unit 6. The sensors comprise for example a microphone 3, a video camera 4, and optionally additional sensors 5. The video camera can be a motorized video camera. It can also be several cameras in one place, especially when several individuals may be present in one place. The additional sensor 5 may be any type of sensor for measuring one or more parameters related to the location and or individuals in this location, such as a temperature sensor, humidity sensor, ambient light sensor and/or motion detection sensor, etc... The sound and/or visual restitution means 2 can be a display associated with speakers, such as a computer screen, or a laptop, or a video projector. The processing unit 6 may be a local computer or a specific videoconference device comprising a processor 7, a modem 8 and a memory 9. The modem 8 enables a wired or wireless connection to a communications network 31. The communication network 31 may be a global network of communication such as Internet or a private communications network such as an intranet.

The system for a remote conferencing 1 further comprises videoconference device forming a control and processing entity 30. The control and processing entity 30 can be implemented as a specific remote conferencing server 36 comprising a processor 37, a modem 38 and a memory 39. The remote conferencing server 36 implements the method of remote conferencing. The remote conferencing server 36 is connected through the modem 38 and the communication network 31 to the various local processing units 6 located where the presenter and attendees have initiated a participation in the videoconference.

A computer program product can be loaded into the memory 39 of the server 36 of the control and processing entity 30. In this case, the computer program product implements the method of remote conference when the program is executed by the processor 37.

The local processing unit 6 serves to generate a data stream with audio and/or video signals and/or other parameters measured by the additional sensors from the output signals of the sensors 3, 4, 5. A first data stream 41 is related to the presenter 21 located in the first place 11. A second and third data streams 42, 43 are related to the particular attendees for example 22, 23, 24 located in the particular places, for example second place 12 and third place 13, respectively. All These data streams are transmitted to the control and processing entity 30. The first data stream 41 related to the presenter 21 may be redirected from the control and processing entity 30 towards the local processing unit 6 of the attendees 22, 23, 24 located in the second place 12 and third place 13, respectively. The data stream from the presenter 41 is presented to each attendee by way of the sound and/or visual restitution means 2, namely the video is restituted by the display and the audio signal is restituted by the speakers. A fourth data stream 44 comprising feedback information is prepared by and sent from the control and processing entity 30 towards the local processing unit 6 of the presenter 21. The feedback information may be presented to the presenter by way of his sound and/or visual restitution means 2. Thus, the control and processing entity 30 enables giving to the presenter 21 a feedback from attendees located in remote places.

The control and processing entity 30 executes various functions for providing live feedback recommendation to the presenter. These functions or at least a part of these functions may be implemented as modules of the computer program product that can be executed by the processor 37 of the server 36 of the control and processing entity 30. Some of these functions may be implemented by stand-alone entity(ies).

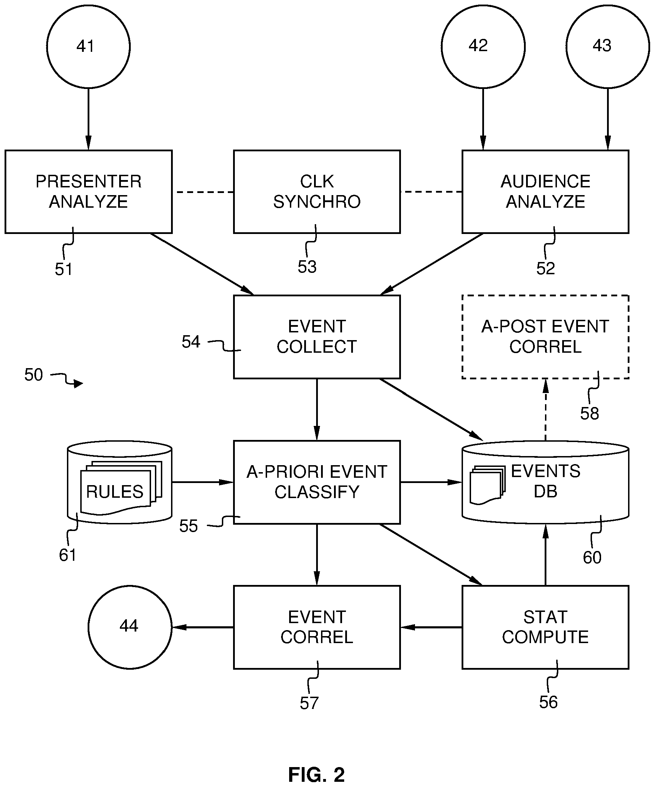

FIG. 2 is a block diagram schematically illustrating an exemplary embodiment of live feedback recommendation 50 that can be implemented in the videoconference system of FIG. 1. The live feedback recommendation embodiment 50 may comprise a scene analyzer 51, a remote audience analyzers 52, a clock synchronizer 53, an event collector 54, an a-priori event classifier 55, a statistical event computation entity 56, a real-time event correlation entity 57, an a-posteriori event correlation entity 58, and an events database 60.

The scene analyzer 51 is an entity in charge of observing and capturing the events generated by the presenter during the presentation based on the first data stream 41 (related to the presenter 21). It combines speech and image processing sub-entities that are known in the art (examples are given hereinafter). For example, the scene analyzer may observe the speaking rate and the tone of the speech by means of the microphone, the frequency of fillers, the eye contact level by means of the video camera, the timing of the presentation, and the electronic documents such as the presentation slides. The analyzers are able to extract the events from the first data stream 41 and also from the documents (e.g. slideshow) related to the presentation.

The scene analyzer 51 may comprise:
- a speech-to-text sub-entity that provides a transcript in real-time of the audio stream;
- a planning manager sub-entity that indicates where the presentation is at the current time, in particular if an agenda of the presentation has been set;
- a voice recognizer sub-entity that identifies who is speaking by comparing the voice of the presenter in the audio stream with a database of pre-stored presenter' voices;
- a face recognizer sub-entity that identifies who is present by comparing the faces of the presenter in the video stream with a database of pre-stored presenter' faces;
- a voice emotion analyzer sub-entity that evaluates parameters such as monotony and nervosity based on an analysis of the presenter's voice in the audio stream;
- a topic identifier sub-entity that detects the topic of the current speech and the transition between two subjects, for example by relying on the transcript provided by the speech-to-text sub-entity;
- etc...
The above examples of sub-entities are not limitative as other parameters may be observed from the first data stream 41.

The remote audience analyzer 52 is an entity in charge of observing and capturing the events generated by the remote audience based on the second and third data streams 42, 43 (related to the attendees 22, 23, 24). It combines an audio and image processing that is known in the art. It may also comprise information about the local processing unit 6 activity. For example, it can be deduced from the analysis of the audio signal whether the audience is attentive or not to the presentation. Discussion detected at a remote place may be an indication of an inattentive audience. As another example, multiple events can be extracted from the image processing, like the posture of the audience, and/or the face analysis of each attendee, etc... All these events can be combined and may give many clues about the audience attention in general. However, these analyzers are not always robust and displaying the events generated directly to the presenter would not result in a reliable feedback.

The clock synchronizer 53 is an entity in charge of synchronizing the scene analyzer 51 and the remote audience analyzer 52. Each event generated by the analyzers is associated with a timestamp. The timestamp will be used to correlate the various events generated by the presenter and the various attendees. Therefore, the clock of the scene analyzer 51 and the clock of the remote audience analyzer 52 are synchronized. A protocol like the Network Time Protocol NTP (of the Internet Engineering Task Force) may be used for synchronizing the time of both clocks.

Thus, an event generated either by the scene analyzer 51 or by the remote audience analyzer 52 may be characterized by various data:
- a type of event information (e.g. energy in the voice, position of the eyebrows, etc ...);
- a numerical description of the event; and
- a timestamp.

The numerical description of the event is a numerical value associated with the type of events. Considering the "pitch" of the voice, the description may be a digital value between 0 and 100. A high value indicates a high frequency vibration of the vocal cords. The relationship between the event observed and the numerical value is not necessarily linear. As an example, when a measurement of the flow of speech of the presenter (number of words per minute) is performed, a too low or too high flow of speech may result in a low value of the field "numerical description" associated with the type of event "flow of speech". As another example, when a measurement of the number of breaks as a function of the number of words spoken is performed, a too low value of this indicator (speech without pause, speech without structure) or too high value of this indicator (too much speech with pause, hesitating speech) may result in a low value of the field "numerical description" associated with the type of event "number of breaks per number of words pronounced".

The event collector 54 collects all the live events detected by the scene analyzer 51 and the remote audience analyzer 52. Further, the event collector 54 stores the collected events in the events database 60. The event collector 54 may use a meta-model to describe data coming from analyzers in order to ease data sharing. The meta-model may be extended with new type of data, in order to take into account new type of analyzers.

The a-priori event classifier 55 is an entity in charge of analyzing the numerical description of the events. The analysis may consist in identifying positive or negative events so as to sort the events. The goal of the analysis is to determine the states of the remote audience and of the presenter based on the events.

Various rules may be pre-defined so that the a-priori event classifier 55 can interpret the meaning of the data and sort the events. These rules are stored in a rules database 61. The events may be sorted into a set of predefined categories related to the remote audience, for example:
- a first audience category may be associated with the fact that the remote audience is paying attention to the presentation;
- a second audience category may be associated with the fact that the remote audience is bored by the presentation;
- a third audience category may be associated with the fact that the remote audience understands the presentation;
- a fourth audience category may be associated with the fact that the remote audience don't understand the presentation;
- etc...
Further, the events may be sorted into an additional set of predefined categories related to the presenter, for example:
- a first presenter category may be associated with the fact that the timing of the presentation is appropriate or not appropriate;
- a second presenter category may be associated with the fact that the audio indices are positive or negative;
- a third presenter category may be associated with the fact that the visual indices are positive or negative;
- etc...

The statistical event computation 56 is an entity in charge of consolidating the events observed. The statistical event computation 56 may perform statistics on sliding time windows. Such statistics may be used to smooth the measures made by the analyzers and to identify trends.

The real-time event correlation entity 57 is an entity in charge of comparing the various events from the various attendees of the remote audience in order to identify common behaviors. This enables associating a reliability factor to the different behavior observed from the remote audience. The real-time event correlation entity 57 also compares the events related to the attendees with the events related to the presenter, for example by comparing indices associated with the presenter to indices associated with the attendees. If these indices are correlated (e.g. this occurs when similar positive indices can be observed), the reliability factor of events observed is increased. When the reliability factor of events exceeds a threshold, the real-time event correlation entity 57 generates a real-time feedback information 44 that is communicated to the presenter 21. The display of this real-time feedback information 44 provides online and live information to the presenter 21, for example via the restitution means 2. The presenter may be able to define how this real-time feedback information is presented. The real-time feedback information may be presented as alerts, for example: a pop-up window displaying during a defined duration, a permanent window depicting icons representing the positive and negative events (e.g. timing, pitch, eye on the webcam ...), audio indicators, or vibrations, etc...

The a-posteriori event correlation entity 58 is an entity in charge of analyzing offline the events generated during the presentation (offline is intended to mean after the end of the presentation). The a-posteriori analysis enables to refine the periods of the presentation during which the remote audience has positive (or negative) feedbacks. To compute a positive (respectively a negative) period, only the reliable data generated by the real-time event correlation entity 57 are considered as input data. Subsequently, a period is extended if events of the same category (positive/negative) are presents in an adjacent period even if this event is not correlated.

Thus, the live feedback recommendation embodiment 50 enables analyzing different events from the presenter and the remote audience and to correlate these respective events to deduce a significant situation. For example, if the energy of the presenter decreases and if a remote audience talking is detected, by correlation of these events, it may be deduced that the attention of the audience declines.

According to an optional feature, the control and processing entity 30 may also execute various functions for providing an advanced event detection to the attendees. These functions or at least a part of these functions may be implemented as modules of the computer program product that can be executed by the processor 37 of the server 36 of the control and processing entity 30. Some of these functions may be implemented by stand-alone entity(ies).

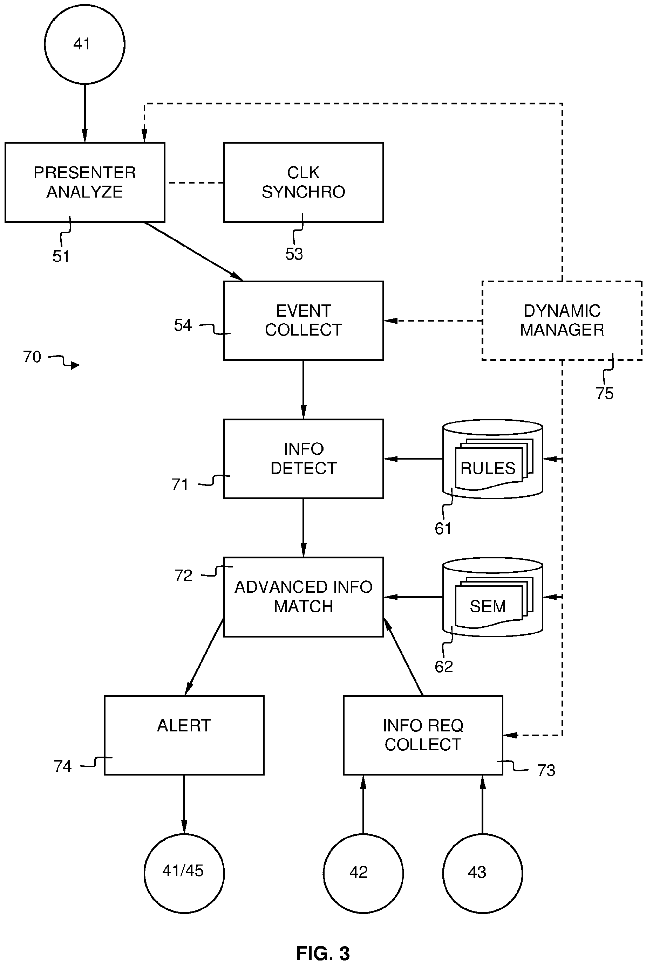

FIG. 3 is a block diagram schematically illustrating an exemplary embodiment of advanced events detection 70 that can be implemented in the videoconference system of FIG. 1. The advanced events detection is in charge of alerting the remote attendees 22, 23, 24 of distant presentations. Most of the attendees of the remote audience are often attending a presentation to get information which is relevant to them. This is particularly true when a presentation lasts a long time. However, the attendees have to attend the whole presentation in order to get the respective relevant information. This situation may result for some of the attendees to "boring" sequences during which their attention may decrease. A first consequence is that a remote attendee may miss the relevant information for him. A second consequence is that the events may be considered by the live feedback recommendation embodiment 50 as negative and will affect the statistics in a negative way.

The advanced events detection embodiment 70 enables each attendee 22, 23, 24 to specify in an individual manner the information which is relevant for them and to be alerted when an event corresponding to an information or a combination of information related to their interests occurs. This results in the attendees having their attention back when the information content they are interested in is addressed.

The advanced events detection embodiment 70 uses the scene analyzer 51, the clock synchronizer 53, the event collector 54, and the rules database 61, and further comprises an information detector 71, an advanced information matcher 72, an attendee requirement collector 73, an information alerter 74, an optional dynamic manager 75, and a semantic database 62.

The information detector 71 is an entity in charge of detecting complex events based on all the collected events and information by combining multiple information and events according to some predefined rules stored in the rules database 61. For example, if a presenter starts to talk, the information detector 71 will provide the following information "Presenter X is talking". If the presenter starts to talk about another subject, it will provide the following information "Mister X is talking about <subject>" and "<subject> is addressed".

The attendee requirement collector 73 is an entity in charge of collecting the requirement that have been specified by each attendee, and to transmit them to the advanced information matcher 72. It may be implemented under the form of an interface enabling the attendee to specify what information/events they are interested in.

The advanced information matcher 72 is an entity in charge of detecting when an information or event fits what is requested by a specific attendee. The advanced information matcher 72 provides a direct matching when an information or event is exactly the one a specific attendee is interested in. It may use semantic relationship of words/topics to create correlation between information and/or events. More precisely, if two words/topics are related to each other and if a user is concerned by one of them, then, when an event and/or information is related to one of the words, an alert will be triggered. The relationship between words is defined and stored in the semantic database 62.

The information alerter 74 is an entity in charge of generating an alert to the attention of a specific attendee. The alert warns the attendee that an interesting event or information is presented. The alert can be a popup window, a sound, etc... The alert can be embedded in the data stream provided to the attendee or may be separately provided by means of an alert stream 45 (see also FIG. 1).

The optional dynamic manager 75 is an entity in charge of updating the analyzer 51, the collector 54, and the databases 61, 62 with new features. For example, a new analyzer sub-entity may be added to the presenter analyzer 51. The addition of a new analyzer enables the videoconference system to evolve. The dynamic manager 75 takes into account a new type of analyzer by modifying the meta-model describing the data coming from analyzers in order to make the new type information usable by the other entities of the system.

The meta-model may be extended with new type of data, in order to take into account the new type of analyzer. The events extracted by the analyzer from the data stream 41 might be combined with other ones to generate new type of complex events. Accordingly, the dynamic manager 75 provides new predefined rules to the rules database 61, new semantic relationships to the semantic database 62, and also modifies the attendee requirement collector 73 to enable each attendee specifying new type of events.

The advanced events detection embodiment 70 enables maintaining remote attendees' attention in a high state when a relevant information is presented during the presentation. Effectively, the remote attendees can explicitly describe what their interest is. The advanced events detection embodiment 70 is analyzing information in real-time and does not require any precise planning of the information dispensed during the presentation. The matching approach implemented by the method and device of the invention enables providing reliable alerts to the attendees.

The drawings and their description hereinbefore illustrate rather than limit the invention.

Although a drawing shows different functional entities as different blocks, this by no means excludes implementations in which a single entity carries out several functions, or in which several entities carry out a single function. In this respect, the drawings are very diagrammatic. The functions of the various elements shown in the FIGS., including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "entity" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be appreciated by those skilled in the art that, though the description describes the live feedback recommendation embodiment 50 and the advanced events detection embodiment 70 implemented by the control and processing entity 30 as a specific remote conferencing server 36, this is an example of a centralized embodiment. Indeed, the live feedback recommendation embodiment 50 and the advanced events detection embodiment 70 may also be implemented by a specific website to which the audience and the presenter may be connected, or by the local processing unit 6 at the presenter location 11 or at one of the audience location 12, 13. The various entities of the the live feedback recommendation embodiment 50 and the advanced events detection embodiment 70 may also be implemented in a decentralized/distributed way, the various entities being spread among the local processing unit 6. Further, a cloud computing based implementation may be used to derive an event notification based on raw data obtained from the audience and from the presenter.

It should be appreciated by those skilled in the art that any block diagrams herein represent conceptual views of illustrative circuitry embodying the principles of the invention.

The use of the term "real-time" should also encompass the notion of "near real-time": real time meaning that, for example, an event is to be generated, processed, and transported to a desired conclusion in less than 1 second, while near real-time meaning that, for example, an event is to be generated, processed, and transported to a desired conclusion in less than 1 minute.

Any reference sign in a claim should not be construed as limiting the claim. The word "comprising" does not exclude the presence of other elements than those listed in a claim. The word "a" or "an" preceding an element does not exclude the presence of a plurality of such element.

## Claims

1. A videoconference method wherein at least one presenter delivers a presentation of multimedia information to a remote audience comprising multiple remote attendees, wherein the method comprises:
- detecting events during the presentation, said events being generated by the remote attendees and by the presenter;
- affecting a timestamp to each event;
- analyzing the different events from the presenter and the remote attendees in synchronicity;
- correlating the events from the presenter and at least one of the remote attendees based on said timestamp;
- deducing a significant situation based on the correlation step;
- forming an event notification based on the significant situation; and
- sending the event notification to the presenter or to a specific attendee of the remote audience.

2. The videoconference method of claim1, wherein analyzing the different events comprises sorting the events according to presenter category and to audience category, and performing statistic on sliding time windows.

3. The videoconference method of claim 1 or 2, the event notification sent to the presenter comprises a live feedback recommendation representative of an attention of the remote audience to the presentation.

4. The videoconference method of claim 1 or 2, wherein the event notification sent to the specific attendee of the remote audience comprises an alert indicating that the presenter is delivering information meeting requirement of said attendee.

5. The videoconference method of claim 4, wherein the method further comprises matching an event with information meeting requirement of said attendee is based on combining a semantic comparison and a rule comparison.

6. The videoconference method according to anyone of the claims 1 to 5, wherein the event notification is presented as an alert to the presenter or to at least one of the remote attendees.

7. A computer program for a videoconference system, the videoconference system comprising at least a presenter processing unit, at least one remote attendee processing unit that are coupled to each other in a telecommunication network architecture through a control and processing entity, the computer program product comprising a set of instructions that, when loaded into a program memory of and run by the control and processing entity of the videoconference system, causes the system to carry out the steps of the videoconference method according to anyone of the claims 1 to 6.

8. A videoconference device coupling at least one presenter delivering a presentation of multimedia information to a remote audience comprising multiple remote attendees through a telecommunication network architecture, the videoconference device comprising:
- a scene analyzer (51) and a remote audience analyzers (52) arranged to detect events during the presentation, said events being generated by the remote attendees and by the presenter, and to analyze the different events from the presenter and the remote attendees in synchronicity;
- a clock synchronizer (53) coupled to the scene analyzer (51) and the remote audience analyzers (52) arranged to affect a timestamp to each event;
- a real-time event correlation entity (57) arranged to correlate the events from the presenter and at least one of the remote attendees based on said timestamp, to deduce a significant situation based on said correlation, to form an event notification based on the significant situation, and to send the event notification to the presenter or to at least one of the remote attendees.

9. The videoconference device of claim 8, further comprising an event collector (54) arranged to collect the events detected by the scene analyzer (51) and the remote audience analyzer (52) and to store the events in an events database (60).

10. The videoconference device of claim 8 or 9, further comprising an a-priori event classifier (55) arranged to analyze and sort the events according to predefined rules stored in a rules database (61).

11. The videoconference device according to anyone of the claims 8 to 10, further comprising a statistical event computation entity (56) arranged to perform statistics related to the events on sliding time windows.

12. The videoconference device according to anyone of the claims 8 to 11, further comprising an a-posteriori event correlation entity (58) arranged to analyze the events generated during the presentation after the end of the presentation.

13. The videoconference device according to anyone of the claims 8 to 12, further comprising an advanced events detection (70) arranged to alert the remote attendees when an event or a combination of events occurs based on individual requirement specified by each remote attendee.

14. The videoconference device according to anyone of the claims 8 to 13, further comprising an information detector (71) arranged to detect a complex event based on the collected events by combining multiple events according to some predefined rules stored in the rules database (61).

15. The videoconference device according to anyone of the claims 8 to 14, further comprising an attendee requirement collector (73) arranged to collect requirements that have been specified by each attendee.

16. The videoconference device according to anyone of the claims 8 to 15, further comprising an advanced information matcher (72) arranged to detect when an event matches with information meeting requirement of said attendee.

17. A server comprising a videoconference device according to anyone of the claims 8 to 16.
